# FASCICULE DE BREVET EUROPEEN

(11) **EP 2 058 810 B1**
(45) Date de publication et mention de la délivrance du brevet: **19.05.2010**
(21) Numéro de dépôt: 08291023.3
(22) Date de dépôt: 03.11.2008
(51) Int. Cl.: G11B 9/02

(54) **Support d'enregistrement ferroélectrique, son procédé de fabrication et système d'enregistrement par micro-pointes l'incorporant**
Ferroelektrischer Speicherträger, sein Herstellungsverfahren und Mikropunkt-Speichersystem, das ihn enthält
Ferroelectric recording medium, method for manufacturing same and microdot recording system including it

(30) Priorité: 06.11.2007 FR 0707781
(43) Date de publication de la demande: 13.05.2009
(73) Titulaire: Commissariat à l'énergie atomique et aux énergies alternatives, 75015 Paris (FR)
(72) Inventeur: Gidon, Serge, 38140 La Murette (FR)
(74) Mandataire: Bolinches, Michel Jean-Marie

(56) Documents cités:
- WO-A-93/21637
- US-A- 2 922 986
- US-A- 5 051 950
- US-A1- 2005 147 018
- US-A1- 2006 023 606

## Description

La présente invention concerne un support d'enregistrement de données de type à couche de mémoire ferroélectrique, son procédé de fabrication et un système d'enregistrement par micro-pointes l'incorporant. L'invention s'applique notamment à des applications informatiques ou multimédia demandant des capacités mémoires élevées.

On classe généralement les diverses techniques d'enregistrement de données sous les vocables « mémoires de masse » (e.g. disques durs, disques optiques) et « mémoires dynamiques » (e.g. mémoires vives dynamiques « DRAM » pour « Dynamic Random Access Memory », mémoires flash, etc.), ces mémoires dynamiques étant encore appelées « mémoires solides » dans la mesure où aucun élément mécanique n'est utilisé. En marge de ces domaines, existe un autre type de mémoire dit à micro-pointes, dont le fonctionnement repose sur un élément micromécanique intégré. La densité surfacique et le parallélisme des moyens d'accès prédisposent ces mémoires à micro-pointes aux applications de grande capacité dans un petit volume, comme attendu dans les dispositifs « nomades » et également dans les dispositifs fixes de grande capacité.

Ces mémoires à micro-pointes reposent sur l'écriture d'informations sur un support d'enregistrement, au moyen de pointes micrométriques de dimension d'apex nanométrique, qui permettent de modifier localement des propriétés de surface du support. On espère ainsi atteindre des densités de stockage égales ou mêmes supérieures à 0,15 Térabit / cm². Comme présenté à l'article [1], le groupe IBM a notamment développé des médias plastiques dans lesquels des micro-pointes chauffées sont susceptibles de faire des nano-trous avec des densités de l'ordre de 0,15 Térabit / cm². Un inconvénient majeur de cette technique thermique réside dans sa consommation énergétique élevée.

Parmi les techniques électriques d'enregistrement connues, on peut citer celles utilisant des matériaux à changement de phase (cf. article [2]) qui montrent des performances intéressantes en terme de consommation énergétique, mais dont le processus d'effacement n'a pas été prouvé. Dans ce cas, c'est l'état de cristallisation du matériau mémoire qui est modifié par effet Joule (mode électrique) sur une zone du support d'enregistrement désignée par la micro-pointe. On lit l'état de cristallinité de la surface de ce matériau par une détection de sa conduction locale.

Il est également connu d'utiliser des média d'enregistrement de données à base de matériaux ferroélectriques, pour stocker de manière pérenne et réversible des informations sous la forme de domaines nanométriques. Cette technique, très prometteuse en termes de densités de stockage et de « cyclabilité », utilise la bi-stabilité naturelle des matériaux ferroélectriques qui sont susceptibles de conserver un état de polarisation électrique après disparition du champ électrique appliqué. Plusieurs méthodes sont actuellement utilisées pour (re)lire l'état de mémoires ferroélectriques.

Une première méthode, décrite initialement dans l'article [3], consiste à détecter l'état de la mémoire par réponse piézoélectrique, i.e. par analyse de la réponse mécanique du domaine mémoire à une excitation électrique. L'état de la mémoire apparaît comme étant en phase ou en opposition de phase avec la sollicitation électrique perturbatrice, suivant l'état dit « up » ou « down » de cette mémoire. Cette approche fait appel au comportement piézoélectrique du matériau ferroélectrique que l'on trouve par exemple dans les céramiques PZT de formule Pb(Zrₓ,Ti₁₋ₓ)O₃, le tantalate de lithium (LiTaO₃) et le niobate de lithium (LiNbO₃).

Une seconde méthode consiste à détecter la variation de capacité sous la micro-pointe, variation qui est associée au changement d'état ferroélectrique, comme décrit dans l'article [4]. Cette approche est intéressante, du fait qu'elle semble donner les densités de stockage les plus élevées, typiquement de l'ordre de 1,5 Térabits / cm².

Quel que soit le mode de détection envisagé - piézoélectrique ou capacitif - pour enregistrer, (re)lire et écrire des informations dans un support ferroélectrique, on doit disposer une contre-électrode électriquement conductrice directement sous la couche mémoire ferroélectrique.

Ces techniques d'enregistrement connues utilisant des couches mémoire ferroélectriques présentent cependant les inconvénients majeurs suivants.

Un premier inconvénient de ces techniques à couches mémoire ferroélectriques réside dans le fait que les contre-électrodes métalliques communément utilisées sous la couche mémoire ferroélectrique sont typiquement à base d'aluminium ou de chrome, ce qui peut générer des processus de « contamination » à l'interface avec le matériau ferroélectrique, interface qui doit être la plus intime possible. En effet, les états oxydés de ces métaux font apparaître au contact de la couche ferroélectrique (par exemple à base de niobate ou de tantalate de lithium) une couche d'interface qui présente une faible susceptibilité électrique comparée à celle du matériau ferroélectrique utilisé, qui est sensiblement plus importante (de type polarisation dipolaire et ionique). Or, il s'avère que cette couche d'interface fait écran au champ électrique appliqué par les micro-pointes et limite donc l'efficacité de son action (en lecture comme en écriture), obligeant l'opérateur à utiliser de plus fortes tensions électriques entre les micro-pointes et la contre-électrode pour pallier cette altération de l'interface entre contre-électrode et couche mémoire.

Un second inconvénient de ces techniques à couches mémoire ferroélectriques réside dans le fait que la surface libre de la couche mémoire (telle que celle libérée par le procédé « Smart Cut », voir article [6], ou bien celle obtenue par polissage) peut être contaminée chimiquement, notamment par la présence d'eau (voir à nouveau l'article [4]), cette contamination se traduisant par un mauvais contact électrostatique entre les micro-pointes et la couche ferroélectrique. De plus, ces couches mémoire sont en général le siège d'une usure mécanique relativement précoce.

Le document US-A-2 922 986 présente un support d'enregistrement de données selon le préambule de la revendication 1 annexée.

Un but de la présente invention est de proposer un support d'enregistrement de données comprenant un substrat, une contre-électrode déposée sur ledit substrat qui est réalisée en une matière comprenant un matériau carboné et qui est destinée à coopérer avec une électrode d'un dispositif de lecture et/ou écriture de ces données, et au moins une couche mémoire ferroélectrique qui est apte à stocker ces données et qui présente une première face en contact étroit avec ladite contre-électrode, qui permette de remédier aux inconvénients précités et notamment à celui inhérent à l'altération de l'interface entre la contre-électrode et la couche mémoire.

A cet effet, ledit matériau carboné est choisi dans le groupe constitué par le carbone sous forme de graphite, le carbone sous forme de diamant amorphe (« DLC »), les carbures d'un élément métallique ou non métallique à l'exclusion des carbures ioniques, et leurs mélanges.

On notera que ce matériau carboné utilisé pour la contre-électrode du support d'enregistrement selon l'invention permet d'éviter l'altération ou « contamination » précitée de l'interface entre cette contre-électrode et la couche mémoire ferroélectrique et, par conséquent, de ne pas faire obstacle au champ électrique appliqué par les micro-pointes du dispositif de lecture/ écriture selon l'invention. Il en résulte qu'il est possible de travailler avec une tension électrique relativement réduite entre les micro-pointes et ce support d'enregistrement.

De préférence, ladite contre-électrode est majoritairement constituée dudit matériau carboné et, à titre encore plus préférentiel, elle est exclusivement constituée de ce matériau carboné.

Avantageusement, ladite contre-électrode comprenant ce matériau carboné peut présenter une conductivité électrique comprise entre 0,1 S/m et 100 S/m.

On notera qu'avec une telle conductivité électrique relativement réduite pour la contre-électrode, la conductance de cette contre-électrode n'est pas très élevée, ce qui n'est pas gênant pour l'enregistrement, la lecture et l'écriture des données sur le support d'enregistrement selon l'invention, du fait que ces opérations mettent essentiellement en oeuvre un fonctionnement électrostatique.

Selon un premier exemple de réalisation de l'invention, ledit matériau carboné est constitué de carbone sous toutes ses formes de liaisons chimiques (i.e. hybridations sp2 ou sp3).

Le carbone utilisé peut être alors sous forme de graphite, déposé par exemple par dépôt physique en phase vapeur (« PVD » : « Physical Vapor Déposition »), ou bien de carbone sous forme de diamant amorphe (« DLC » : « Diamond Like Carbon »), déposé par exemple par dépôt chimique en phase vapeur (« CVD » : Chemical Vapor Déposition ») ou dépôt chimique en phase vapeur assisté par plasma (« PECVD » : « Plasma Enhanced Chemical Vapor Déposition »). Ce carbone peut être rendu plus conducteur en le chargeant d'éléments électriquement conducteurs présents selon une fraction réduite, tels que du nickel, du chrome, de l'argent, du silicium ou du bore.

Selon un second exemple de réalisation de l'invention, ledit matériau carboné est constitué d'au moins un carbure d'un élément métallique de préférence choisi dans le groupe constitué par le titane, le zirconium, le tungstène et le hafnium, ou bien d'au moins un carbure d'un élément non métallique, de préférence le silicium ou le bore.

Selon une autre caractéristique de l'invention, ladite contre-électrode peut avantageusement présenter une épaisseur comprise entre 10 nm et 500 nm, de préférence sensiblement égale à 100 nm.

Selon une autre caractéristique de l'invention, ladite couche mémoire ferroélectrique est à base d'au moins un composé ferroélectrique pouvant être avantageusement choisi dans le groupe constitué par les céramiques PZT de formule Pb(Zrₓ,Ti₁₋ₓ)O₃, le tantalate de lithium (LiTaO₃) le tantalate de potassium (KTaO₃), le ruthénate de strontium (SrRuO₃), le titanate de baryum (BaTiO₃), le titanate de strontium (SrTiO₃), et le niobate de lithium (LiNbO₃) et leurs mélanges. On notera toutefois que l'on pourrait également utiliser tout autre matériau ferroélectrique connu, pour réaliser cette couche mémoire.

Avantageusement, le support d'enregistrement peut comprendre en outre une couche de protection qui est destinée à protéger une seconde face de ladite couche mémoire ferroélectrique opposée à ladite première face, notamment de la pollution externe et de l'usure mécanique vis-à-vis dudit dispositif de lecture et/ou écriture, ladite couche de protection présentant une conductivité électrique qui est inférieure à 1 S/m et de préférence inférieure à 10⁻⁴ S/m et qui est fonction des courants de fuite de ladite couche mémoire.

On notera que cette couche de protection selon l'invention permet d'éviter la contamination chimique (notamment par l'eau extérieure) de la surface libre de la couche mémoire, ce qui permet de ne pas pénaliser le contact électrostatique entre les micro-pointes du dispositif de lecture/ écriture et le support d'enregistrement selon l'invention. Outre la protection de la couche mémoire contre les attaques chimiques, cette couche de protection est conçue pour retarder l'usure mécanique de la couche ferroélectrique, tout en facilitant son contact électrique avec les micro-pointes.

Selon une autre caractéristique de l'invention, ladite couche de protection peut être constituée de carbone à l'état pur déposé par exemple par dépôt chimique en phase vapeur, dépôt physique en phase vapeur ou dépôt chimique en phase vapeur assisté par plasma et, avantageusement, cette couche de protection est constituée de carbone sous forme de diamant amorphe, de préférence déposé par dépôt chimique en phase vapeur assisté par plasma.

Egalement avantageusement, ladite couche de protection peut présenter une épaisseur inférieure à 5 nm. On notera cette épaisseur extrêmement réduite permet de ne pas pénaliser les opérations de lecture/ écriture du support d'enregistrement par le dispositif correspondant.

Un système d'enregistrement de données selon l'invention, qui comprend un support d'enregistrement de données et un dispositif de lecture et/ou écriture des données de type comprenant un réseau de micro-pointes aptes à modifier localement les propriétés d'au moins une couche mémoire ferroélectrique dudit support, est **caractérisé en ce que** ce support d'enregistrement est tel que défini ci-dessus.

On notera que le champ électrique (qui provoque le basculement des domaines ferroélectriques) est normalement appliqué selon l'invention entre la micro-pointe et la contre-électrode. Celles-ci doivent donc être de part et d'autre du matériau ferroélectrique et au plus près l'une de l'autre, de sorte que le champ électrique soit fort (i.e. susceptible d'être plus élevé que le champ coercitif du matériau) pour écrire une information.

Selon une autre caractéristique de l'invention, ladite couche mémoire ferroélectrique peut avantageusement être adaptée pour présenter un effet piézoélectrique inverse en réponse à des sollicitations électriques dudit dispositif transmises par ladite électrode et ladite contre-électrode (voir l'article [3] précité), de sorte que l'on détecte l'état de ladite couche mémoire via la détection de ses réponses mécaniques à ces sollicitations.

En variante, ladite couche mémoire ferroélectrique selon l'invention peut être adaptée pour présenter des variations de capacité électrique en réponse à des excitations générées par un circuit résonant dudit dispositif, de sorte que l'on détecte l'état de ladite couche mémoire via la détection desdites variations (voir l'article [4] précité).

D'une manière générale, on notera que le support d'enregistrement selon la présente invention n'est pas limité à son utilisation avec un dispositif de lecture et/ou écriture de type à micro-pointes, et que ce support de l'invention pourrait s'appliquer à des systèmes d'enregistrement de données de type mémoire solide ou dynamique, formant par exemple une mémoire vive dynamique (« DRAM ») ou une mémoire flash.

Le procédé selon l'invention de fabrication d'un support d'enregistrement tel que défini ci-dessus comprend un dépôt de la matière formant ladite contre-électrode sur ladite première face de la couche mémoire par dépôt chimique en phase vapeur, dépôt physique en phase vapeur ou dépôt chimique en phase vapeur assisté par plasma.

Selon une autre caractéristique de l'invention, ce procédé comprend en outre un dépôt ultérieur par dépôt chimique en phase vapeur, dépôt physique en phase vapeur ou dépôt chimique en phase vapeur assisté par plasma, sur une seconde face de ladite couche mémoire opposée à ladite première face, d'une couche de protection qui est notamment destinée à protéger cette seconde face de la pollution externe et de l'usure mécanique vis-à-vis du dispositif de lecture et/ou écriture et qui présente une conductivité électrique inférieure à 1 S/m et de préférence inférieure à 10⁻⁴ S/m.

Avantageusement, l'on applique ladite couche de protection via un dépôt chimique en phase vapeur de carbone de préférence sous forme de diamant amorphe, ce dépôt étant assisté par un plasma haute fréquence.

Selon une autre caractéristique de l'invention, préalablement à chacun de ces deux dépôts de contre-électrode et de couche de protection, on prépare avantageusement ladite première et/ou seconde face(s) de la couche mémoire par polissage mécanique (par exemple par la technique « CMP » : « Chemical-Mechanical Polishing », i.e. planarisation ou polissage mécano-chimique), pour assurer la planéité de l'interface d'adhérence, puis par attaque chimique ou gravure (par exemple selon la technique « RIE », i.e. « Reactive Ion Etching » i.e. gravure assistée par plasma chimiquement réactif, ou bien « Etch RF » i.e. gravure par radiofréquences), pour en extraire d'éventuelles sous-couches contaminées organiquement.

Selon un premier mode de réalisation de l'invention, le procédé de fabrication comprend essentiellement les étapes suivantes :
- on dépose la matière formant ladite contre-électrode sur ledit substrat, de préférence en silicium,
- on rapporte une ébauche de ladite couche mémoire ferroélectrique, sur ce substrat ainsi revêtu de cette contre-électrode,
- on réduit l'épaisseur de cette ébauche pour l'obtention de la couche mémoire selon une épaisseur par exemple inférieure à 100 nm, puis
- on dépose la couche de protection sur la couche mémoire.

Selon un second mode de réalisation de l'invention, le procédé de fabrication comprend essentiellement les étapes suivantes :
a) on implante des ions hydrogène et/ou hélium dans une couche de support ferroélectrique destinée à constituer la couche mémoire,
b) on dépose en surface la matière formant la contre-électrode sur cette couche de support, pour faire adhérer la contre-électrode à ladite première face de la couche mémoire,
c) on reporte par pression cette couche de support ainsi revêtue de la contre-électrode sur ledit substrat, de préférence en silicium, de telle manière que la contre-électrode adhère audit substrat,
d) on rompt la couche de support selon le plan d'arrêt desdits ions par dilatation, pour l'obtention de la couche mémoire se terminant par ladite seconde face avec une épaisseur réduite par exemple inférieure à 50 nm, puis
e) on dépose ladite couche de protection sur cette seconde face, pour l'obtention du support d'enregistrement selon l'invention.

Avantageusement, le procédé selon ce second mode de réalisation de l'invention peut comprendre en outre, pour l'obtention à l'étape c) d'une adhérence améliorée de la contre-électrode au substrat, un dépôt préalable par « PECVD » ou « CVD » d'une couche de silice (SiO₂) sur cette contre-électrode. Cette couche de silice présente une épaisseur de préférence comprise entre 10 nm et 100 nm.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en relation avec les dessins joints, parmi lesquels :
la figure 1 est une vue schématique illustrant une étape du procédé de fabrication d'un support d'enregistrement selon le second mode de l'invention, montrant en coupe transversale l'assemblage sur un substrat d'une couche de support ferroélectrique revêtue de la contre-électrode,
la figure 2 est une vue schématique en coupe transversale montrant l'empilement intermédiaire obtenu par l'étape d'assemblage de la figure 1,
la figure 3 est une vue schématique en coupe transversale montrant le résultat d'une étape ultérieure du procédé selon ce second mode de l'invention, mise en oeuvre sur l'empilement intermédiaire de la figure 2, et
la figure 4 est une vue schématique en coupe transversale montrant le support d'enregistrement finalement obtenu par ce second mode de l'invention, par mise en oeuvre d'une étape ultérieure de dépôt d'une couche de protection sur l'empilement de la figure 3.

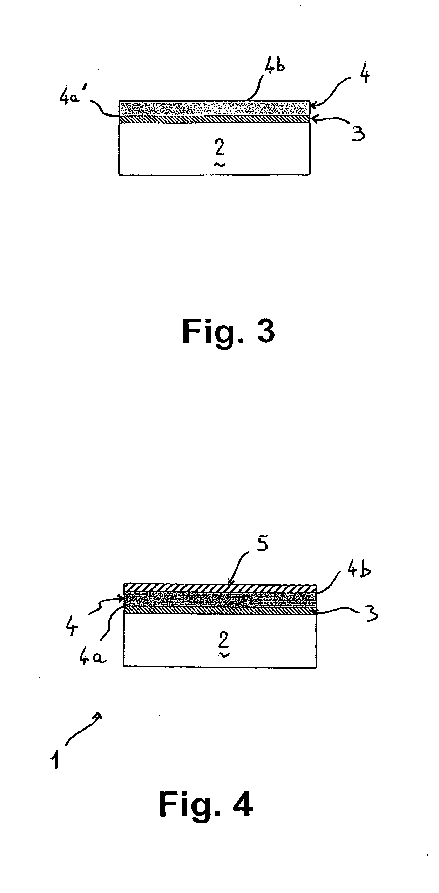

Comme illustré à la figure 4, un support d'enregistrement de données 1 selon l'invention, qui est en particulier destiné a coopérer avec un dispositif de lecture et/ou écriture (non représenté) de type comprenant des micro-pointes, est de préférence formé de l'empilement suivant de couches :
- un substrat 2 par exemple en silicium ;
- une contre-électrode 3 déposée sur le substrat 2 de préférence par dépôt chimique en phase vapeur, dépôt physique en phase vapeur ou dépôt chimique en phase vapeur assisté par plasma, et destinée à coopérer avec une électrode du dispositif de lecture et/ou écriture, cette contre-électrode 3 présentant une épaisseur par exemple de l'ordre de 100 nm et une conductivité électrique comprise entre 0,1 S/m et 100 S/m et étant de préférence constituée de carbone (sous forme de graphite ou de diamant amorphe) ou d'un carbure non ionique tel qu'un carbure de titane, zirconium, tungstène, hafnium, silicium ou de bore ;
- une couche mémoire ferroélectrique 4 apte à stocker ces données et présentant une première face 4a en contact étroit avec la contre-électrode 3, cette couche 4 étant par exemple formée d'une céramique PZT, de tantalate de lithium ou de potassium, de ruthénate de strontium, de titanate de baryum ou de strontium, ou bien de niobate de lithium ; et
- une couche de protection 5 qui est de préférence déposée via un dépôt chimique en phase vapeur de carbone (avantageusement du carbone « DLC », i.e. sous forme de diamant amorphe) assisté par un plasma haute fréquence, et qui est destinée à protéger une seconde face 4b de la couche mémoire 4 opposée à la première face 4a notamment de la pollution externe et de l'usure mécanique vis-à-vis du dispositif de lecture et/ou écriture, cette couche 5 présentant de préférence une épaisseur inférieure à 5 nm, une conductivité électrique inférieure à 10⁻⁴ S/m et étant formée de carbone pur, avantageusement sous forme de diamant amorphe.

On notera que ce procédé de dépôt chimique en phase vapeur assisté par plasma (« PECVD ») peut comprendre notamment un craquage de réactifs contenant du carbone, tels que le méthane, au moyen d'un plasma haute fréquence, afin de libérer le carbone actif qui vient alors se déposer sur la surface libre de la couche ferroélectrique 4.

On notera également qu'il est possible de mettre en oeuvre d'autres procédés de dépôt de carbone pour déposer cette couche de protection 5, tels que le dépôt physique en phase vapeur (« PVD ») ou le dépôt chimique en phase vapeur (« CVD »), à titre non limitatif.

En référence à l'article [5], le support d'enregistrement 1 illustré à la figure 4 peut être obtenu en mettant en oeuvre les étapes successives suivantes, selon le premier mode de réalisation de l'invention :
- on dépose la matière formant la contre-électrode 3 sur le substrat 2,
- on rapporte sur ce substrat 2, ainsi revêtu de la contre-électrode 3, une ébauche de la couche mémoire ferroélectrique 4,
- on réduit l'épaisseur de cette ébauche pour l'obtention de la couche mémoire 4 selon une épaisseur par exemple inférieure à 100 nm, puis
- on dépose la couche de protection 5 sur cette couche mémoire 4.

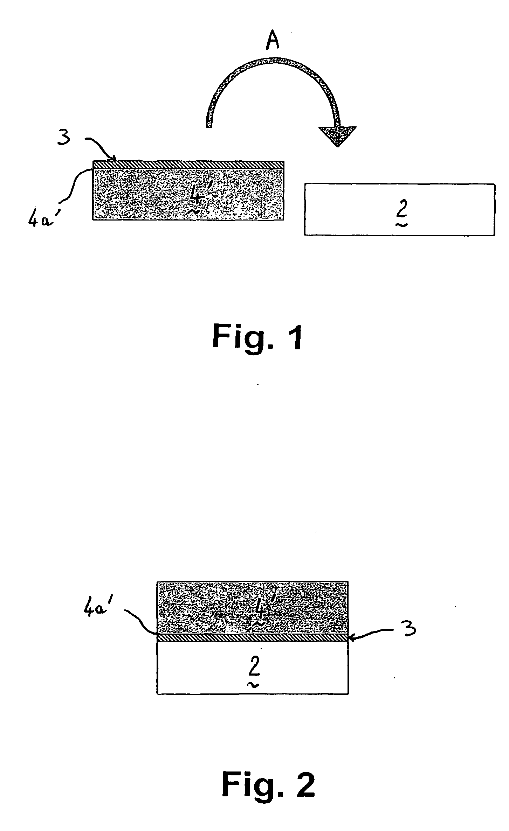

En référence à l'article [6], le support d'enregistrement 1 illustré à la figure 4 peut être obtenu en mettant en oeuvre les étapes successives suivantes, selon le second mode de réalisation de l'invention :
- on implante au préalable des ions hydrogène et hélium dans une couche de support ferroélectrique 4' destinée à constituer la couche mémoire 4 (cette étape d'implantation ionique n'est pas illustrée à la figure 1),
- on dépose en surface la matière formant la contre-électrode 3 sur la couche de support 4', pour faire adhérer la contre-électrode 3 à la première face 4a' de cette couche 4', comme illustré à la figure 1,
- on reporte par pression (voir flèche A de la figure 1) cette couche de support 4' ainsi revêtue de la contre-électrode 3 sur le substrat 2, pour que cette contre-électrode 3 adhère à ce dernier comme illustré à la figure 2, étant précisé que l'on procède avantageusement à un dépôt préalable d'une couche de silice de 10 à 100 nm d'épaisseur sur la contre-électrode 3, pour l'obtention d'une adhérence améliorée de cette dernière au substrat 2,
- on rompt la couche de support 4' selon le plan d'arrêt des ions implantés (voir figure 3), pour l'obtention de la couche mémoire 4 se terminant par la seconde face 4b avec une épaisseur par exemple inférieure à 50 nm, puis
- on dépose la couche de protection 5 sur cette seconde face 4b, pour l'obtention du support d'enregistrement 1 illustré à la figure 4.

Que l'on opère selon le premier ou le second modes de réalisation pour fabriquer le support d'enregistrement 1 selon l'invention, on notera que l'on prépare avantageusement, avant les dépôts précités de la contre-électrode 3 et de la couche de protection 5, la première et la seconde faces 4a et 4b de la couche mémoire 4 par polissage mécanique pour assurer la planéité de l'interface d'adhérence, puis par attaque chimique ou gravure, pour en extraire les éventuelles sous-couches contaminées organiquement.

### Références des articles cités :

[1] The "Millipede" - More than one thousand tips for future AFM data storage, P. Vettiger, M. Despont, U. Drechsler, U. Durig, W. Haberle, M.I. Lutwyche, H.E Rothuizen, R. Stutuz, R. Widmer, G.K. Binnig, IBM J. Res. Develop. Vol. 44 (3) May 2000, pp. 323-340.
[2] Electrical Probe Storage using a Joule effect in Phase Change Media, S. Gidon, O. Lemonnier, B. Rolland, O. Bichet and C. Dressler, Y. Samson, Applied Physics Letters, Vol. 85, (26), December 2004.
[3] Local poling of ferroelectric polymers by scanning force microscopy, P. Güthner and K. Dransfeld, Appl. Phys. Lett. 61 (9), p.1137, 1992.
[4] Observation of Surface Polarization Distribution Using Temperature-Controlled Scanning Nonlinear Dielectric Microscopy, Koya OHARA, Yasuo CHO, Jpn. J. Appl. Phys. p. 4630, vol. 43, No. 7B (2004).
[5] Tbit/inch² ferroelectric data storage based on scanning nonlinear dielectric microscopy, Yasuo Cho, Kenjiro Fujimoto, Yoshiomi Hiranaga, Yasuo Wagatsuma, Applied Physics Letters, Vol. 81, 23 2002.
[6] Integration of Single-Crystal LiNbO₃ Thin Film on Silicon by Laser Irradiation and Ion Implantation-Induced Layer Transfer, Young-Bae Park, Bumki Min, Kerry J. Vahala, Harry A. Atwater, Adv. Mater. 2006, 18, pp. 1533-1536.

## Revendications

1. Support d'enregistrement (1) de données comprenant un substrat (2), une contre-électrode (3) déposée sur ledit substrat qui est réalisée en une matière comprenant un matériau carboné et qui est destinée à coopérer avec une électrode d'un dispositif de lecture et/ou écriture de ces données, et au moins une couche mémoire ferroélectrique (4) qui est apte à stocker ces données et qui présente une première face (4a) en contact étroit avec ladite contre-électrode, **caractérisé en ce que** ledit matériau carboné est choisi dans le groupe constitué par le carbone sous forme de graphite, le carbone sous forme de diamant amorphe (« DLC »), les carbures d'un élément métallique ou non métallique à l'exclusion des carbures ioniques, et leurs mélanges.

2. Support d'enregistrement (1) selon la revendication 1, **caractérisé en ce que** ladite contre-électrode (3) présente une conductivité électrique comprise entre 0,1 S/m et 100 S/m.

3. Support d'enregistrement (1) selon la revendication 1 ou 2, **caractérisé en ce que** ladite contre-électrode (3) est exclusivement constituée dudit matériau carboné.

4. Support d'enregistrement (1) selon une des revendications 1 à 3, **caractérisé en ce que** ledit matériau carboné est constitué de carbone sous forme de graphite, déposé par exemple par dépôt physique en phase vapeur.

5. Support d'enregistrement (1) selon une des revendications 1 à 3, **caractérisé en ce que** ledit matériau carboné est constitué de carbone sous forme de diamant amorphe (« DLC »), déposé par exemple par dépôt chimique en phase vapeur ou dépôt chimique en phase vapeur assisté par plasma (« PECVD »).

6. Support d'enregistrement (1) selon une des revendications 1 à 3, **caractérisé en ce que** ledit matériau carboné est constitué d'au moins un carbure d'un élément métallique de préférence choisi dans le groupe constitué par le titane, le zirconium, le tungstène et le hafnium.

7. Support d'enregistrement (1) selon une des revendications 1 à 3, **caractérisé en ce que** ledit matériau carboné est constitué d'au moins un carbure d'un élément non métallique, de préférence le silicium ou le bore.

8. Support d'enregistrement (1) selon une des revendications précédentes, **caractérisé en ce que** ladite contre-électrode (3) présente une épaisseur comprise entre 10 nm et 500 nm, de préférence sensiblement égale à 100 nm.

9. Support d'enregistrement (1) selon une des revendications précédentes, **caractérisé en ce que** ladite couche mémoire ferroélectrique (4) est à base d'au moins un composé ferroélectrique choisi dans le groupe constitué par les céramiques PZT de formule Pb(Zrₓ,Ti₁₋ₓ)O₃, le tantalate de lithium LiTaO₃, le tantalate de potassium KTaO₃, le ruthénate de strontium SrRuO₃, le titanate de baryum BaTiO₃, le titanate de strontium SrTiO₃, et le niobate de Iithium LiNbO₃ et leurs mélanges.

10. Support d'enregistrement (1) selon une des revendications précédentes, **caractérisé en ce qu'**il comprend en outre une couche de protection (5) qui est destinée à protéger une seconde face (4b) de ladite couche mémoire ferroélectrique (4) opposée à ladite première face (4a), notamment de la pollution externe et de l'usure mécanique vis-à-vis dudit dispositif de lecture et/ou écriture, ladite couche de protection présentant une conductivité électrique qui est inférieure à 1 S/m et de préférence inférieure à 10⁻⁴ S/m et qui est fonction des courants de fuite de ladite couche mémoire.

11. Support d'enregistrement (1) selon la revendication 10, **caractérisé en ce que** ladite couche de protection (5) est constituée de carbone déposé par exemple par dépôt chimique en phase vapeur, dépôt physique en phase vapeur ou dépôt chimique en phase vapeur assisté par plasma.

12. Support d'enregistrement (1) selon la revendication 11, **caractérisé en ce que** ladite couche de protection (5) est constituée de carbone sous forme de diamant amorphe, de préférence déposé par dépôt chimique en phase vapeur assisté par plasma.

13. Support d'enregistrement (1) selon une des revendications 10 à 12, **caractérisé en ce que** ladite couche de protection (5) présente une épaisseur inférieure à 5 nm.

14. Système d'enregistrement comprenant un support d'enregistrement (1) de données et un dispositif de lecture et/ou écriture des données de type comprenant un réseau de micro-pointes aptes à modifier localement les propriétés d'au moins une couche mémoire ferroélectrique (4) dudit support, **caractérisé en ce que** ce support d'enregistrement est tel que défini à l'une des revendications précédentes.

15. Système d'enregistrement selon la revendication 14, **caractérisé en ce que** ladite couche mémoire ferroélectrique (4) est adaptée pour présenter un effet piézoélectrique inverse en réponse à des sollicitations électriques dudit dispositif transmises par ladite électrode et ladite contre-électrode (3), de sorte que l'on détecte l'état de ladite couche mémoire via la détection de ses réponses mécaniques à ces sollicitations.

16. Système d'enregistrement selon la revendication 14, **caractérisé en ce que** ladite couche mémoire ferroélectrique (4) est adaptée pour présenter des variations de capacité électrique en réponse à des excitations générées par un circuit résonant dudit dispositif, de sorte que l'on détecte l'état de ladite couche mémoire via la détection desdites variations.

17. Procédé de fabrication d'un support d'enregistrement (1) selon une des revendications 1 à 13, **caractérisé en ce qu'**il comprend un dépôt de la matière formant ladite contre-électrode (3) sur ladite première face (4a) de la couche mémoire (4) par dépôt chimique en phase vapeur, dépôt physique en phase vapeur ou dépôt chimique en phase vapeur assisté par plasma.

18. Procédé de fabrication selon la revendication 17, **caractérisé en ce qu'**il comprend en outre un dépôt ultérieur par dépôt chimique en phase vapeur, dépôt physique en phase vapeur ou dépôt chimique en phase vapeur assisté par plasma, sur une seconde face (4b) de ladite couche mémoire (4) opposée à ladite première face (4a), d'une couche de protection (5) qui est notamment destinée à protéger cette seconde face de la pollution externe et de l'usure mécanique vis-à-vis dudit dispositif de lecture et/ou écriture et qui présente une conductivité électrique inférieure à 1 S/m et de préférence inférieure à 10⁻⁴ S/m.

19. Procédé de fabrication selon la revendication 18, **caractérisé en ce que** l'on applique ladite couche de protection (5) via un dépôt chimique en phase vapeur assisté par un plasma haute fréquence, de carbone de préférence sous forme de diamant amorphe.

20. Procédé de fabrication selon la revendication 18 ou 19, **caractérisé en ce que**, préalablement à chacun de ces deux dépôts, on prépare ladite première (4a) et/ou seconde face(s) (4b) de la couche mémoire (4) par polissage mécanique, pour assurer la planéité de l'interface d'adhérence, puis par attaque chimique ou gravure, pour en extraire d'éventuelles sous-couches contaminées organiquement.

21. Procédé de fabrication selon la revendication 20, **caractérisé en ce qu'**il comprend essentiellement les étapes suivantes :
- on dépose la matière formant ladite contre-électrode (3) sur ledit substrat (2), de préférence en silicium,
- on rapporte une ébauche de ladite couche mémoire ferroélectrique (4), sur ce substrat ainsi revêtu de cette contre-électrode,
- on réduit l'épaisseur de cette ébauche pour l'obtention de la couche mémoire selon une épaisseur par exemple inférieure à 100 nm, puis
- on dépose ladite couche de protection (5) sur cette couche mémoire.

22. Procédé de fabrication selon la revendication 20, **caractérisé en ce qu'**il comprend essentiellement les étapes suivantes :
a) on implante des ions hydrogène et/ou hélium dans une couche de support ferroélectrique (4') destinée à constituer ladite couche mémoire (4),
b) on dépose en surface la matière formant ladite contre-électrode (3) sur cette couche de support, pour faire adhérer la contre-électrode à ladite première face (4a') de la couche mémoire,
c) on reporte par pression cette couche de support ainsi revêtue de la contre-électrode sur ledit substrat (2), de préférence en silicium, de telle manière que la contre-électrode adhère audit substrat,
d) on rompt ladite couche de support (4') selon le plan d'arrêt desdits ions par dilatation, pour l'obtention de ladite couche mémoire (4) se terminant par ladite seconde face (4b) avec une épaisseur réduite par exemple inférieure à 50 nm, puis
e) on dépose ladite couche de protection (5) sur cette seconde face, pour l'obtention du support d'enregistrement (1).

23. Procédé de fabrication selon la revendication 22, **caractérisé en ce que**, pour l'obtention d'une adhérence améliorée de ladite contre-électrode (3) au substrat (2) à l'étape c), on dépose au préalable sur cette contre-électrode une couche de silice d'épaisseur comprise entre 10 nm et 100 nm.

## Claims

1. Data record carrier (1) comprising a substrate (2), a counter-electrode (3) deposited on said substrate which is made of a substance comprising a carbonaceous material and which is intended to cooperate with an electrode of a device for reading and/or writing these data, and at least one ferroelectric memory layer (4) which is able to store these data and which exhibits a first face (4a) in close contact with said counter-electrode, **characterized in that** said carbonaceous material is chosen from the group consisting of carbon in the form of graphite, carbon in the form of amorphous diamond ("DLC"), the carbides of a metallic or non-metallic element with the exclusion of ionic carbides, and their mixtures.

2. Record carrier (1) according to Claim 1, **characterized in that** said counter-electrode (3) exhibits an electrical conductivity of between 0.1 S/m and 100 S/m.

3. Record carrier (1) according to Claim 1 or 2, **characterized in that** said counter-electrode (3) consists exclusively of said carbonaceous material.

4. Record carrier (1) according to one of Claims 1 to 3, **characterized in that** said carbonaceous material consists of carbon in the form of graphite, deposited for example by physical vapor phase deposition.

5. Record carrier (1) according to one of Claims 1 to 3, **characterized in that** said carbonaceous material consists of carbon in the form of amorphous diamond ("DLC"), deposited for example by chemical vapor phase deposition or plasma enhanced chemical vapor phase deposition ("PECVD").

6. Record carrier (1) according to one of Claims 1 to 3, **characterized in that** said carbonaceous material consists of at least one carbide of a metallic element preferably chosen from the group consisting of titanium, zirconium, tungsten and hafnium.

7. Record carrier (1) according to one of Claims 1 to 3, **characterized in that** said carbonaceous material consists of at least one carbide of a non-metallic element, preferably silicon or boron.

8. Record carrier (1) according to one of the preceding claims, **characterized in that** said counter-electrode (3) exhibits a thickness of between 10 nm and 500 nm, preferably substantially equal to 100 nm.

9. Record carrier (1) according to one of the preceding claims, **characterized in that** said ferroelectric memory layer (4) is based on at least one ferroelectric compound chosen from the group consisting of PZT ceramics of formula Pb(Zrₓ,Ti₁₋ₓ)O₃, lithium tantalate (LiTaO₃), potassium tantalate (KTaO₃), strontium ruthenate (SrRuO₃), barium titanate (BaTiO₃), strontium titanate (SrTiO₃), and lithium niobate (LiNbO₃) and their mixtures.

10. Record carrier (1) according to one of the preceding claims, **characterized in that** it furthermore comprises a protective layer (5) which is intended to protect a second face (4b) of said ferroelectric memory layer (4) opposite to said first face (4a), in particular from external pollution and mechanical wear in relation to said reading and/or writing device, said protective layer exhibiting an electrical conductivity which is less than 1 S/m and preferably less than 10⁻⁴ S/m and which is dependent on the leakage currents of said memory layer.

11. Record carrier (1) according to Claim 10, **characterized in that** said protective layer (5) consists of carbon deposited for example by chemical vapor phase deposition, physical vapor phase deposition or plasma enhanced chemical vapor phase deposition.

12. Record carrier (1) according to Claim 11, **characterized in that** said protective layer (5) consists of carbon in the form of amorphous diamond, preferably deposited by plasma enhanced chemical vapor phase deposition.

13. Record carrier (1) according to one of Claims 10 to 12, **characterized in that** said protective layer (5) exhibits a thickness of less than 5 nm.

14. Recording system comprising a data record carrier (1) and a data reading and/or writing device of the type comprising an array of micro-tips able to locally modify the properties of at least one ferroelectric memory layer (4) of said carrier, **characterized in that** this record carrier is such as defined in one of the preceding claims.

15. Recording system according to Claim 14, **characterized in that** said ferroelectric memory layer (4) is adapted to exhibit an inverse piezoelectric effect in response to electrical loadings of said device transmitted by said electrode and said counter-electrode (3), so that the state of said memory layer is detected by detecting its mechanical responses to these loadings.

16. Recording system according to Claim 14, **characterized in that** said ferroelectric memory layer (4) is adapted to exhibit variations of electrical capacitance in response to excitations generated by a resonant circuit of said device, so that the state of said memory layer is detected by detecting said variations.

17. Method of manufacturing a record carrier (1) according to one of Claims 1 to 13, **characterized in that** it comprises a deposition of the material forming said counter-electrode (3) on said first face (4a) of the memory layer (4) by chemical vapor phase deposition, physical vapor phase deposition or plasma enhanced chemical vapor phase deposition.

18. Method of manufacture according to Claim 17, **characterized in that** it furthermore comprises a subsequent deposition by chemical vapor phase deposition, physical vapor phase deposition or plasma enhanced chemical vapor phase deposition, on a second face (4b) of said memory layer (4) opposite to said first face (4a), of a protective layer (5) which is in particular intended to protect this second face from external pollution and mechanical wear in relation to said reading and/or writing device and which exhibits an electrical conductivity of less than 1 S/m and preferably less than **10-⁴** S/m.

19. Method of manufacture according to Claim 18, **characterized in that** said protective layer (5) is applied via a chemical vapor phase deposition enhanced by a high-frequency plasma, of carbon preferably in the form of amorphous diamond.

20. Method of manufacture according to Claim 18 or 19, **characterized in that**, prior to each of these two depositions, said first (4a) and/or second face(s) (4b) of the memory layer (4) is(are) prepared by mechanical polishing, to ensure the planarity of the adhesion interface, then by chemical attack or etching, to extract therefrom any organically contaminated sub-layers.

21. Method of manufacture according to Claim 20, **characterized in that** it comprises essentially the following steps:
- the material forming said counter-electrode (3) is deposited on said substrate (2), preferably silicon,
- an outline of said ferroelectric memory layer (4) is added onto this substrate thus overlaid with this counter-electrode,
- the thickness of this outline is reduced to obtain the memory layer according to a thickness of for example less than 100 nm, then
- said protective layer (5) is deposited on this memory layer.

22. Method of manufacture according to Claim 20, **characterized in that** it comprises essentially the following steps:
a) hydrogen and/or helium ions are implanted in a ferroelectric carrier layer (4') intended to constitute said memory layer (4),
b) the material forming said counter-electrode (3) is deposited at the surface on this carrier layer, to make the counter-electrode adhere to said first face (4a') of the memory layer,
c) this carrier layer thus overlaid with the counter-electrode is transferred by pressure onto said substrate (2), preferably of silicon, in such a manner that the counter-electrode adheres to said substrate,
d) said carrier layer (4') is broken along the barrier plane stopping said ions by expansion, to obtain said memory layer (4) terminating in said second face (4b) with a reduced thickness of for example less than 50 nm, then
e) said protective layer (5) is deposited on this second face, to obtain the record carrier (1).

23. Method of manufacture according to Claim 22, **characterized in that**, to obtain improved adhesion of said counter-electrode (3) to the substrate (2) in step c), a silica layer of between 10 nm and 100 nm in thickness is deposited beforehand on this counter-electrode.

## Patentansprüche

1. Datenspeichermedium (1), umfassend ein Substrat (2), eine Gegenelektrode (3), die auf dem Substrat aufgebracht ist, die aus einem Material hergestellt ist, das ein Kohlenstoffmaterial umfasst und die vorgesehen ist, mit einer Elektrode einer Vorrichtung zum Lesen und/oder Schreiben der Daten zusammenzuwirken, und wenigstens eine ferroelektrische Speicherschicht (4), die in der Lage ist, die Daten zu speichern und eine erste Seite (4a) hat, die sich in engem Kontakt mit der Gegenelektrode befindet, **dadurch gekennzeichnet, dass** das Kohlenstoffmaterial ausgewählt ist aus der Gruppe bestehend aus Kohlenstoff in Form von Graphit, Kohlenstoff in Form von amorphem Diamant ("DLC"), Carbiden eines metallischen oder nichtmetallischen Elements ausschließlich ionischer Carbide, und deren Mischungen.

2. Speichermedium (1) nach Anspruch 1, **dadurch gekennzeichnet, dass** die Gegenelektrode (3) eine elektrische Leitfähigkeit von 0,1 S/m bis 100 S/m hat.

3. Speichermedium (1) nach Anspruch 1 oder 2, **dadurch gekennzeichnet, dass** die Gegenelektrode (3) ausschließlich aus Kohlenstoffmaterial besteht.

4. Speichermedium (1) nach einem der Ansprüche 1 bis 3, **dadurch gekennzeichnet, dass** das Kohlenstoffmaterial aus Kohlenstoff in Form von Graphit besteht, das beispielsweise mittels physikalischer Gasphasenabscheidung aufgebracht ist.

5. Speichermedium (1) nach einem der Ansprüche 1 bis 3, **dadurch gekennzeichnet, dass** das Kohlenstoffmaterial aus Kohlenstoff in Form von amorphem Diamant ("DLC") besteht, das beispielsweise mittels chemischer Gasphasenabscheidung oder plasmaunterstützter chemischer Gasphasenabscheidung ("PECVD") aufgebracht ist.

6. Speichermedium (1) nach einem der Ansprüche 1 bis 3, **dadurch gekennzeichnet, dass** das Kohlenstoffmaterial aus wenigstens einem Carbid eines metallischen Elements besteht, bevorzugt ausgewählt aus der Gruppe bestehend aus Titan, Zirkonium, Wolfram und Hafnium.

7. Speichermedium (1) nach einem der Ansprüche 1 bis 3, **dadurch gekennzeichnet, dass** das Kohlenstoffmaterial aus wenigstens einem Carbid eines nichtmetallischen Elements besteht, bevorzugt Silizium oder Bor.

8. Speichermedium (1) nach einem der vorherigen Ansprüche, **dadurch gekennzeichnet, dass** die Gegenelektrode (3) eine Dicke von 10 nm bis 500 nm, bevorzugt im Wesentlichen gleich 100 nm, hat.

9. Speichermedium (1) nach einem der vorherigen Ansprüche, **dadurch gekennzeichnet, dass** die ferroelektrische Speicherschicht (4) auf wenigstens einer ferroelektrischen Verbindung basiert, ausgewählt aus der Gruppe bestehend aus PZT-Keramiken der Formel Pb(ZrₓTi₁₋ₓ)O₃, Lithiumtantalat LiTaO₃, Kaliumtantalat KTaO₃, Strontiumruthenat SrRuO₃, Bariumtitanat BaTiO₃, Strontiumtitanat SrTiO₃ und Lithiumniobat LiNbO₃ und deren Mischungen.

10. Speichermedium (1) nach einem der vorherigen Ansprüche, **dadurch gekennzeichnet, dass** es weiterhin eine Schutzschicht (5) umfasst, die vorgesehen ist, eine zweite Seite (4b) der ferroelektrischen Speicherschicht (4), die sich gegenüber der ersten Seite (4a) befindet, vor äußerer Verschmutzung und mechanischer Abnutzung gegenüber der Vorrichtung zum Lesen und/oder Schreiben zu schützen, wobei die Schutzschicht eine elektrische Leitfähigkeit hat, die kleiner als 1 S/m und bevorzugt kleiner als 10⁻⁴ S/m ist und die vom Ableitstrom der Speicherschicht abhängt.

11. Speichermedium (1) nach Anspruch 10, **dadurch gekennzeichnet, dass** die Schutzschicht (5) aus Kohlenstoff besteht, der beispielweise mittels chemischer Gasphasenabscheidung, physikalischer Gasphasenabscheidung oder plasmaunterstützter chemischer Gasphasenabscheidung aufgebracht ist.

12. Speichermedium (1) nach Anspruch 11, **dadurch gekennzeichnet, dass** die Schutzschicht (5) aus Kohlenstoff in Form von amorphem Diamant besteht, der vorzugsweise mittels plasmaunterstützter chemischer Gasphasenabscheidung aufgebracht ist.

13. Speichermedium (1) nach einem der Ansprüche 10 bis 12, **dadurch gekennzeichnet, dass** die Schutzschicht (5) eine Dicke von weniger als 5 nm hat.

14. Speichersystem, umfassend ein Datenspeichermedium (1) und eine Vorrichtung zum Lesen und/oder Schreiben von Daten eines Typs, der ein Netz von Mikrospitzen umfasst, die in der Lage sind, die Eigenschaften von wenigstens einer ferroelektrischen Speicherschicht (4) des Mediums lokal zu verändern, **dadurch gekennzeichnet, dass** das Speichermedium wie in einem der vorherigen Ansprüche definiert ist.

15. Speichersystem nach Anspruch 14, **dadurch gekennzeichnet, dass** die ferroelektrische Speicherschicht (4) geeignet ist, als Reaktion auf elektrische Beanspruchungen der Vorrichtung, die von der Elektrode und der Gegenelektrode (3) ausgesendet werden, einen inversen piezoelektrischen Effekt zu zeigen, so dass der Zustand der Speicherschicht über die Feststellung ihrer mechanischen Reaktionen auf diese Beanspruchungen festgestellt wird.

16. Speichersystem nach Anspruch 14, **dadurch gekennzeichnet, dass** die ferroelektrische Speicherschicht (4) geeignet ist, als Reaktion auf Anregungen, die von einem Resonanzkreis der Vorrichtung erzeugt werden, Schwankungen der elektrischen Kapazitäten zu zeigen, so dass der Zustand der Speicherschicht durch die Feststellung dieser Schwankungen festgestellt wird.

17. Verfahren zur Herstellung eines Speichermediums (1) nach einem der Ansprüche 1 bis 13, **dadurch gekennzeichnet, dass** es ein Aufbringen des Materials, das die Gegenelektrode (3) bildet, auf die erste Seite (4a) der Speicherschicht (4) mittels chemischer Gasphasenabscheidung, physikalischer Gasphasenabscheidung oder plasmaunterstützter chemischer Gasphasenabscheidung umfasst.

18. Herstellungsverfahren nach Anspruch 17, **dadurch gekennzeichnet, dass** es weiterhin ein nachfolgendes Aufbringen einer Schutzschicht (5) mittels chemischer Gasphasenabscheidung, physikalischer Gasphasenabscheidung oder plasmaunterstützter chemischer Gasphasenabscheidung auf eine zweite Seite (4b) der ferroelektrischen Speicherschicht (4), die sich gegenüber der ersten Seite (4a) befindet, umfasst, die vorgesehen ist, die zweite Seite vor äußerer Verschmutzung und mechanischer Abnutzung gegenüber der Vorrichtung zum Lesen und/oder Schreiben zu schützen und die eine elektrische Leitfähigkeit hat, die kleiner als 1 S/m und bevorzugt kleiner als 10⁻⁴ S/m ist.

19. Herstellungsverfahren nach Anspruch 18, **dadurch gekennzeichnet, dass** die Schutzschicht (5) mittels hochfrequenzplasmaunterstützter chemischer Gasphasenabscheidung von Kohlenstoff, bevorzugt in Form von amorphem Diamant, aufgebracht wird.

20. Herstellungsverfahren nach Anspruch 18 oder 19, **dadurch gekennzeichnet, dass** bevorzugt vor jeder der beiden Auftragungen, die erste (4a) und/oder zweite Seite (4b) der Speicherschicht (4) durch mechanisches Polieren vorbereitet wird, um die Planarität der Adhäsionsfläche sicherzustellen, und anschließend mittels chemischem Angriff oder Ätzen vorbereitet wird, um daraus alle organisch kontaminierten Unterschichten zu extrahieren.

21. Herstellungsverfahren nach Anspruch 20, **dadurch gekennzeichnet, dass** es im Wesentlichen die folgenden Schritte umfasst:
- Aufbringen des Materials, das die Gegenelektrode (3) bildet, auf das Substrat (2), bevorzugt Silizium,
- Aufbringen einer Rohform der ferroelektrischen Speicherschicht (4) auf das so mit der Gegenelektrode beschichtete Substrat,
- Reduzieren der Dicke der Rohform, um di e Speicherschicht gemäß einer Dicke von beispielsweise weniger als 100 nm zu erhalten, gefolgt von
- Aufbringen der Schutzschicht (5) auf die Speicherschicht.

22. Verfahren zur Herstellung nach Anspruch 20, **dadurch gekennzeichnet, dass** es im Wesentlichen die folgenden Schritte umfasst:
a) Implantieren von Wasserstoff- und/oder Heliumionen in eine ferroelektrische Trägerschicht (4'), die als Speicherschicht (4) vorgesehen ist,
b) Aufbringen des Materials, das die Gegenelektrode (3) bildet, auf die Oberfläche dieser Trägerschicht, damit die Gegenelektrode an der ersten Seite (4a') der Speicherschicht haftet,
c) Übertragen der so mit der Gegenelektrode beschichteten Trägerschicht mittels Druck auf das Substrat (2), bevorzugt aus Silizium, so dass die Gegenelektrode am Substrat haftet,
d) Abbrechen der Trägerschicht (4'), entlang der Grenze, entlang der die Expansion der Ionen gestoppt ist, so dass eine Speicherschicht (4) erhalten wird, die in der zweiten Seite (4b) mit einer verringerten Dicke, beispielsweise weniger als 50 nm, endet, gefolgt von
e) Aufbringen der Schutzschicht (5) auf die zweite Seite, um ein Speichermedium (1) zu erhalten.

23. Verfahren zur Herstellung nach Anspruch 22, **dadurch gekennzeichnet, dass**, um eine verbesserte Haftung der Gegenelektrode (3) an Substrat (2) in Schritt c) zu erhalten, vorher eine Siliziumschicht mit einer Dicke von 10 bis 100 nm auf dieser Gegenelektrode aufgebracht wird.
